# EUROPÄISCHE PATENTSCHRIFT

(11) **EP 4 264 647 B1**
(45) Veröffentlichungstag und Bekanntmachung des Hinweises auf die Patenterteilung: **30.07.2025**
(21) Anmeldenummer: 21794843.9
(22) Anmeldetag: 20.10.2021
(51) Int. Cl.: H01F 7/08, H01F 7/16, F16K 31/06

(54) **ELEKTROMAGNET ZUR ERZEUGUNG EINER LINEAREN BEWEGUNG**
ELECTROMAGNET FOR PRODUCING A LINEAR MOVEMENT
ÉLECTRO-AIMANT POUR LA PRODUCTION D'UN MOUVEMENT LINÉAIRE

(30) Priorität: 21.12.2020 DE 102020134522
(43) Veröffentlichungstag der Anmeldung: 25.10.2023
(73) Patentinhaber: Solero Technologies Villingen GmbH, 78048 Villingen-Schwenningen (DE)
(72) Erfinder: FLÜHS, Joachim, 78050 Villingen-Schwenningen (DE); ZELANO, Frank, 78112 St. Georgen (DE)
(74) Vertreter: Westphal, Mussgnug & Partner Patentanwälte mbB
(86) Internationale Anmeldenummer: PCT/EP2021/079055
(87) Internationale Veröffentlichungsnummer: WO 2022/135766

(56) Entgegenhaltungen:
- EP-A1- 2 896 813
- US-A- 4 546 955
- US-A1- 2018 347 722

## Beschreibung

Die Erfindung betrifft einen Elektromagneten zur Erzeugung einer linearen Bewegung gemäß Oberbegriff des Patentanspruchs 1.

Einen gattungsgemäßen Elektromagneten beschreibt die EP 1 288 481 B1, wonach eine Ankerbaugruppe einen Hauptanker und eine Ankerplatte aufweist, wobei im unbestromten Zustand einer Erregerspule des Elektromagneten die Ankerplatte vom Hauptanker unter Ausbildung eines Luftspaltes beabstandet gelagert ist. Die Ankerplatte ist mit einer in einem Magnetkern verschiebbar gelagerten Hülse verbunden. Die Ankerplatte wird von dieser Hülse im unbestromten Zustand der Erregerspule in einer Anfangsstellung gehalten, so dass bei einer Strombeaufschlagung der Erregerspule zunächst der Hauptanker unter Überwindung des Luftspalts zur Ankerplatte bewegt wird und anschließend der Hauptanker mit anliegender Ankerplatte, also die gesamte Ankerbaugruppe zusammen mit der Hülse in Richtung des Magnetkerns bewegt wird.

Bei diesem bekannten Elektromagneten ist ein Ventilstellglied ausgehend von dem Hauptanker durch die Hülse geführt und wirkt mit einem Abgasrückführventil zusammen, welches ein in einem Ventilgehäuse angeordnetes Ventilschließglied aufweist, welches seinerseits mit einem Ventilsitz zusammenwirkt. Eine an dem Ventilgehäuse sich abstützende Rückstellfeder ist gegenüber einem Kopplungsstück vorgespannt, welches die Hülse des Elektromagneten mit dem Ventilschließglied verbindet. Damit wirkt die Rückstellfeder auf das Kopplungsstück, auf die Hülse, auf das Ventilschließglied und das Ventilstellglied, die dadurch in die Ausgangsstellung zurück bewegt werden.

Somit wirkt bei diesem bekannten Elektromagneten dessen Ventilstellglied nicht direkt mit dem Ventilschließglied des Abgasrückführventils zusammen, sondern indirekt über die Hülse und das Kopplungsstück, welches mit der Rückstellfeder einen elastischen Kraftschluss bildet. Diese hohe Anzahl von Komponenten ist nachteilig und führt zu hohen Herstellkosten.

Ferner ist es bekannt, Proportionalmagnete oder mittels Elektromagneten angetriebene Proportionalventile mit einer Ausfallsicherungsfunktion (Failsafe-Funktion) auszustatten, um im Fall einer Fehlfunktion, insbesondere bei einem Stromausfall einen Notbetrieb sicherzustellen, bei welchem der Ankerstößel in eine definierte Stellung gebracht wird oder eine vordefinierte Kraft erzeugt wird, um bspw. bei einem Ventil eine definierte Durchströmung einzustellen oder eine Durchströmung zu unterbrechen. So wird zur Realisierung einer solchen Ausfallsicherungsfunktion eine vorgespannte Feder als sogenannte Failsafe-Feder eingesetzt, gegen die der elektromagnetische Antrieb anarbeiten muss und daher in nachteiliger Weise zu einem hohen Energieverbrauch führt.

Weiteren Stand der Technik bilden die Druckschriften US 2018/347722 A1, US 4 546 955 A und EP 2 896 813 A1.

Der Erfindung liegt daher die Aufgabe zugrunde, einen verbesserten Elektromagneten der eingangs genannten Art mit einem einfachen Aufbau anzugeben, welcher insbesondere eine Ausfallsicherungsfunktion aufweist.

Diese Aufgabe wird gelöst durch einen Elektromagneten mit den Merkmalen des Patentanspruchs 1 gelöst.

Ein solcher Elektromagnet zur Erzeugung einer linearen Bewegung umfasst:
- ein hohlzylindrisches Gehäuse,
- eine in dem Gehäuse angeordnete Erregerspule,
- ein gegenüber dem Gehäuse feststehender Polkern, und
- eine in der Erregerspule zentrisch gelagerte Ankerbaugruppe mit einem gegenüber dem Gehäuse verschiebbaren Hauptanker und einer gegenüber dem Gehäuse verschiebbaren Ankerscheibe, wobei
- im unbestromten Zustand der Erregerspule zwischen dem Hauptanker und der Ankerscheibe ein Luftspalt ausgebildet ist und im bestromten Zustand der Erregerspule der Hauptanker und die Ankerscheibe aneinander anliegen.

Erfindungsgemäß ist vorgesehen, dass die Ankerbaugruppe ein elastisches Element aufweist, mit dessen Vorspannkraft im bestromten Zustand der Erregerspule ein elastischer Kraftschluss zwischen dem Hauptanker und der Ankerscheibe derart herstellbar ist, dass bei einem Unterschreiten der Vorspannkraft durch eine von der bestromten Erregerspule in der Ankerbaugruppe bewirkten Magnetkraft die Ankerscheibe unter Erzeugung des Luftspalts gegen den Polkern bewegbar ist.

Durch die Integration eines vorzugsweise als Failsafe-Feder ausgebildeten elastischen Elements in die Ankerbaugruppe ist es möglich, dass mit der Bestromung der Erregerspule, insbesondere mit einer kurzzeitigen und hohen Strombeaufschlagung sich die Ankerscheibe und der Hauptanker unter Überwindung eines Luftspalts gegenseitig anziehen, wodurch die Failsafe-Feder gespannt und somit im Vergleich der Vorspannkraft im unbestromten Zustand der Erregerspule eine etwas höhere Vorspannkraft als elastischer Kraftschluss erzeugt wird. Erst wenn die Stromstärke unter einen minimalen Wert sinkt, bei welchem die mit der Bestromung der Erregerspule in der Ankerbaugruppe erzeugte Magnetkraft unter die Vorspannkraft der Failsafe-Feder sinkt, wird die Ankerscheibe aufgrund der Vorspannkraft unter Ausbildung des Luftspalts gegen den Polkern bewegt. Befindet sich in dieser Konstellation der Hauptanker nicht in seiner Ruhestellung, wird auch dieser in diese Ruhestellung bewegt.

Der Vorteil einer solchen Anordnung einer 2-teiligen Ankerbaugruppe mit integrierter Failsafe-Feder besteht darin, dass der Zustand der an dem Hauptanker anliegenden Ankerscheibe mit einer solchen Stromstärke stabil haltbar ist, die im Vergleich zu derjenigen Stromstärke, um die Failsafe-Feder unter Überwindung des Luftspaltes vorzuspannen, kleiner ist. Die Ursache hierfür ist in dem durch den Luftspalt erzeugten magnetischen Widerstand zu sehen, welcher mit einer höheren Stromstärke zu überwinden ist, um anschließend, also bei an dem an dem Hauptanker anliegenden Ankerscheibe, die Magnetkraft in der Ankerbaugruppe in einem weiten Strombereich zwischen den genannten Stromstärken zu variieren. Damit wirkt bei an dem Hauptanker anliegenden Ankerscheibe die Ankerbaugruppe wie ein einteiliger Anker. Damit lässt sich der erfindungsgemäße Elektromagnet als Aktuator energieeffizient Betreiben.

Vorzugsweise ist das elastische Element derart ausgebildet, dass bei einer unbestromten Erregerspule mittels des elastischen Elementes eine definierte Vorspannkraft erzeugbar ist, wenn die Ankerscheibe unter Ausbildung des Luftspaltes an den Polkern anliegt.

Damit wirkt bei einer unbestromten Erregerspule, bspw. bei einem Ausfall der Stromversorgung des Elektromagneten nur das elastische Element mit einer definierten Federvorspannung und einer definierten Federrate über die an dem Polkern anliegenden Ankerscheibe nach außen.

Erfindungsgemäß ist vorgesehen, dass
- die Ankerscheibe einen Führungsbolzen aufweist,
- der Hauptanker eine Sacklochbohrung zur verschieblichen Aufnahme des Führungsbolzens aufweist, und
- das elastische Element in der Sacklochbohrung angeordnet ist, welches sich einerseits gegen einen Bohrungsgrund der Sacklochbohrung und andererseits gegen den Führungsbolzen abstützt.

Eine solche Ankerbaugruppe stellt einen einfachen mechanischen Aufbau dar, der kostengünstig realisierbar und äußerst funktionssicher ist.

Es ist besonders vorteilhaft, wenn gemäß einer weiteren bevorzugten Ausgestaltung der Erfindung der Polkern eine Führungsbuchse zur verschieblichen Aufnahme eines Ankerstößels aufweist und der Ankerstößel kraftschlüssig mit der Ankerscheibe verbunden ist. Somit wird eine Ankerbaugruppe, einschließlich eines Ankerstößels mit nur wenigen Komponenten geschaffen.

Ein weiterer Vorteil ergibt sich dadurch, dass der Hauptanker verschiebbar in einem topfförmigen Flussleitrohr mit einem Boden angeordnet ist. Dies reduziert die Montagekomplexität des Elektromagneten.

Schließlich ist das elastische Element durch eine Druckfeder kostengünstig realisiert.

Die Erfindung wird nachfolgend anhand eines Ausführungsbeispiels unter Bezugnahme auf die beigefügten Figuren ausführlich beschrieben. Es zeigen:
- Figur 1: eine schematische Schnittdarstellung eines Elektromagneten gemäß der Erfindung in einem unbestromten Zustand,
- Figur 2: eine schematische Darstellung des Elektromagneten gemäß Figur 1 in einem bestromten Zustand, und
- Figur 3: ein Hub-Kraft-Diagramm zur Erläuterung der Funktionsweise des Elektromagneten gemäß den Figuren 1 und 2.

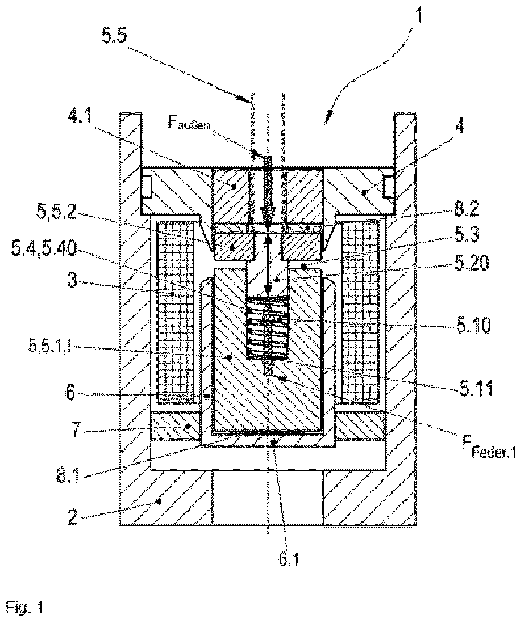

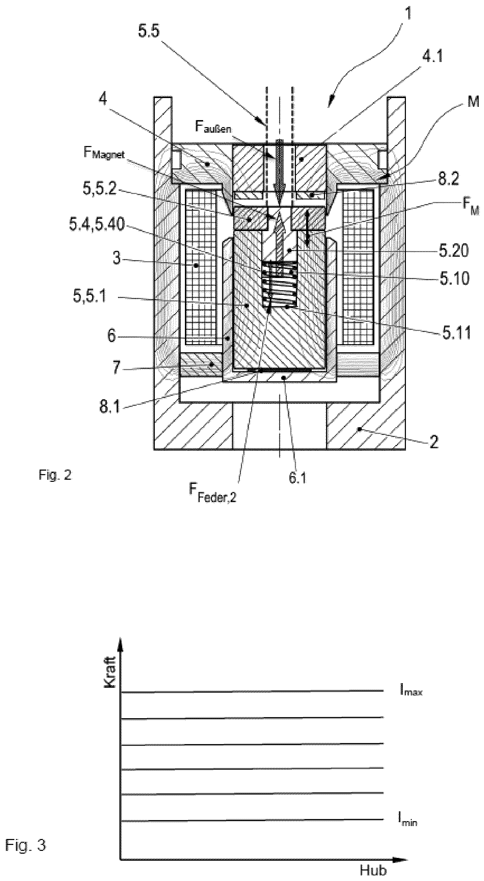

Der als Aktuator einsetzbare Elektromagnet 1 gemäß den Figuren 1 und 2 ist als Proportionalmagnet ausgeführt und umfasst folgende Komponenten:
- ein hohlzylindrisches Gehäuse 2 mit einer topfförmigen Geometrie,
- eine in dem Gehäuse 2 angeordnete Erregerspule 3,
- eine zentrisch bzgl. der Erregerspule 3 in einem topfförmigen Flussleitrohr 6 angeordnete Ankerbaugruppe 5, die einen gegenüber dem Flussleitrohr 6 und damit auch gegenüber dem Gehäuse 2 verschiebbaren Hauptanker 5.1 aus magnetischem Material und eine gegenüber dem Hauptanker 5.1 verschiebbare Ankerscheibe 5.2 aus magnetischem Material umfasst, wobei die Ankerscheibe 5.2 zentrisch mit einem nicht magnetischen Führungsbolzen 5.20 verbunden ist, welcher verschiebbar in eine Sacklochbohrung 5.10 des Hauptankers 5.1 ragt,
- ein als Druckfeder 5.40 ausgeführtes elastisches Element 5.4, welches als Failsafe-Feder in der Sacklochbohrung 5.10 angeordnet ist, wobei sich die Druckfeder 5.40 einerseits an dem Bohrungsgrund 5.11 der Sacklochbohrung 5.10 und andererseits an dem Führungsbolzen 5.20 der Ankerscheibe 5.2 abstützt,
- eine Rückschlussplatte 7, mit welcher das Flussleitrohr 6 im Bereich von dessen Boden 6.1 zentrisch in dem Gehäuse 2 gehalten wird, wobei der Durchmesser der Rückschlussplatte 7 dem Innendurchmesser des Gehäuses 2 entspricht,
- ein mit dem Gehäuse 2 kraftschlüssig oder formschlüssig verbundener Polkern 4 mit einer zentrisch angeordneten Führungsbuchse 4.1, durch die ein schematisch dargestellter Ankerstößel 5.5 geführt und mit der Ankerscheibe 5.2 kraftschlüssig verbunden ist, wobei der Ankerstößel 5.5 als Stellglied zur Betätigung eines Stellgliedes, bspw. eines Ventils dient,
- eine auf dem Boden 6.1 des Flussleitrohrs 6 angeordnete Antiklebscheibe 8.1, und
- eine zwischen der Führungsbuchse 4.1 des Polkerns 4 und der Ankerscheibe 5.2 angeordnete weitere Antiklebscheibe 8.2.

Bei dem Elektromagneten 1 gemäß den Figuren 1 und 2 kann der Ankerstößel 5.5 entfallen, wenn die Stellkraft des Elektromagneten 1 direkt an der Ankerscheibe 5.2 oder dem Führungsbolzen 5.20 abgenommen wird.

Weitere Details des Elektromagneten 1, wie bspw. elektrische Anschlussleitungen für die Erregerspule 3 sind der besseren Übersichtlichkeit wegen nicht dargestellt. Auch eine Folienlagerung des Hauptankers 5.1 und der Ankerscheibe 5.2 in dem Flussleitrohr 6 mittels einer Gleitfolie ist in den Figuren 1 und 2 nicht dargestellt.

Die Figuren 1 und 2 zeigen den Elektromagneten 1 in jeweils unterschiedlichen Betriebszuständen, die nachfolgend erläutert werden.

Ein unbestromter Zustand des Elektromagneten 1 ist in Figur 1 dargestellt. In diesem Zustand wirkt kein Magnetfeld in der Ankerbaugruppe 5, sondern lediglich eine Vorspannkraft mit einem ersten Wert F_{Feder,1} der in der Sacklochbohrung 5.10 angeordneten und vorgespannten Druckfeder 5.40. Aufgrund dieser Vorspannkraft F_{Feder,1} wird die Ankerscheibe 5.2 unter Ausbildung eines Luftspaltes 5.3 zwischen derselben und dem Hauptanker 5.1 an die an der Führungsbuchse 4.1 des Polkerns 4 anliegenden Antiklebscheibe 8.2 gegen eine auf den Ankerstößel 5.5 wirkende äußere Kraft F_{außen} gedrückt. Der Hauptanker 5.1 befindet sich in diesem unbestromten Zustand in einer Ruhestellung I, in welchem der Hauptanker 5.1 über die Antiklebscheibe 8.1 am Boden 6.1 des Flussleitrohrs 6 anliegt.

In dieser Position wird die Ankerscheibe 5.2 durch die vorgespannte Druckfeder 5.40 an den Polkern 4 gegen die äußere Kraft F_{außen} gedrückt und damit eine Ausfallsicherungsfunktion (Failsafe-Funktion) realisiert, d. h. der Ventilstößel 5.5 wird in eine definierte Position als Notfallposition entsprechend der Figur 1 gebracht. Hierbei wirkt die Druckfeder 5.40 allein mit ihrer definierten Federvorspannung und definierten Federrate.

Durch eine Strombeaufschlagung, bspw. ausgeführt als Impulsbestromung mit einem hohen Stromwert Iₘₐₓ entsteht ein in Figur 2 dargestellter Magnetkreis M, so dass sich der Hauptanker 5.1 und die Ankerscheibe 5.2 mit einer Magnetkraft F_{M} gegenseitig anziehen, bis die Ankerscheibe 5.2 und der Hauptanker 5.1 unter Überwindung des Luftspaltes 5.3 gegen die Vorspannkraft der Druckfeder 5.40 vollständig aneinander liegen, wobei die Vorspannkraft der Druckfeder 5.40 sich auf einen zweiten Wert F_{Feder,2} erhöht. Damit ist die Failsafe-Funktion abgeschaltet bzw. "überbrückt".

Liegen die Ankerscheibe 5.2 und der Hauptanker 5.1 ohne Luftspalt aneinander, genügt ein gegenüber dem Stromwert Iₘₐₓ kleinerer Stromwert I (I ≤ Iₘₐₓ) um die als Failsafe-Feder wirkende Druckfeder 5.40 im gespannten Zustand bei an dem Hauptanker 5.1 anliegenden Ankerscheibe 5.2 zu halten. In diesem Zustand wirkt der Hauptanker 5.1 mit der anliegenden Ankerscheibe 5.2 wie ein einteiliger Anker, an welchem eine Magnetkraft F_{Magnet} angreift. In Abhängigkeit der Differenz des Wertes dieser Magnetkraft F_{Magnet} und der gegen diese Magnetkraft F_{Magnet} gerichteten äußeren Kraft F_{außen} wird die Ankergruppe 5 ausgehend von der Ruhestellung I des Hauptankers 5.1 in Richtung des Polkerns 4 bewegt.

Der Wert dieser Magnetkraft F_{Magnet} ist in einem weiten Strombereich zwischen dem Stromwert Iₘₐₓ und einem minimalen Stromwert Iₘᵢₙ variierbar, wie dies in Figur 3 dargestellt ist.

Der Parameter der in dem Hub-Kraft-Diagramm dargestellten Kurvenschar ist der Strom I der Erregerspule 3. Daraus ist erkennbar, dass die Failsafe-Funktion abgeschaltet bleibt, solange der Strom I der Erregerspule einen Wert zwischen Iₘₐₓ und Iₘᵢₙ einnimmt.

Sinkt der Stromwert I unter den minimalen Stromwert Iₘᵢₙ (I < Iₘᵢₙ), sinkt die zwischen dem Hauptanker 5.1 und der anliegenden Ankerscheibe 5.2 wirkende Magnetkraft F_{M} unter den zweiten Wert F_{Feder,2} der Vorspannkraft der Druckfeder 5.40, wodurch der Hauptanker 5.1 und die Ankerscheibe 5.2 unter Ausbildung des Luftspaltes 5.3 getrennt werden. Es entsteht wieder der Zustand des Elektromagneten 1 gemäß Figur 1, d. h. die Druckfeder 5.40 ist wieder als Failsafe-Feder wirksam und damit die Failsafe-Funktion eingeschaltet.

Die Federvorspannung der als Failsafe-Feder eingesetzten Druckfeder 5.40 kann bspw. auf einen mittleren Wert zwischen der mit dem minimalen Stromwert Iₘᵢₙ erzeugten Magnetkraft und der mit dem maximalen Stromwert Iₘₐₓ eingestellt werden. Wird in diesem Fall eine zum Hauptanker 5.1 in Reihe geschaltete Feder eingesetzt, wäre die Stellkraft des Elektromagneten 1 im bestromten Zustand immer größer als die Kraft der Druckfeder 5.40.

### Bezugszeichenliste

- 1: Elektromagnet
- 2: Gehäuse
- 3: Erregerspule
- 4: Polkern
- 4.1: Führungsbuchse des Polkerns 4

- 5: Ankerbaugruppe
- 5.1: Hauptanker der Ankerbaugruppe 5
- 5.10: Sacklochbohrung des Hauptankers 5.1
- 5.11: Bohrungsgrund der Sacklochbohrung 5.10
- 5.2: Ankerscheibe der Ankerbaugruppe 5
- 5.20: Führungsbolzen der Ankerscheibe 5.2
- 5.3: Luftspalt
- 5.4: elastisches Element
- 5.40: Druckfeder
- 5.5: Ankerstößel

- 6: Flussleitrohr
- 6.1: Boden des Flussleitrohrs 6

- 7: Rückschlussplatte
- 8.1: Antiklebscheibe
- 8.2: Antiklebscheibe

- F_{außen}: äußere auf den Ankerstößel 5.5, auf die Ankerscheibe 5.2 oder den Führungsbolzen 5.20 wirkende Kraft
- F_{Feder,1}: Federkraft der Druckfeder 5.40
- F_{Feder,2}: Federkraft der Druckfeder 5.40
- F_{M}: Magnetkraft zwischen Hauptanker 5.1 und Ankerscheibe 5.2
- F_{Magnet}: Magnetkraft auf die Ankerbaugruppe 5

- I: Ruhestellung des Hauptankers 5.1
- M: Magnetkreis

## Patentansprüche

1. Elektromagnet (1) zur Erzeugung einer linearen Bewegung, umfassend:
- ein hohlzylindrisches Gehäuse (2) mit einer topfförmigen Geometrie,
- eine in dem Gehäuse angeordnete Erregerspule (3),
- ein gegenüber dem Gehäuse (2) feststehender Polkern (4), und
- eine in der Erregerspule (3) zentrisch gelagerte Ankerbaugruppe (5) mit einem gegenüber dem Gehäuse verschiebbaren Hauptanker (5.1) und einer gegenüber dem Gehäuse (2) verschiebbaren Ankerscheibe (5.2), wobei
- im unbestromten Zustand der Erregerspule (3) zwischen dem Hauptanker (5.1) und der Ankerscheibe (5.2) ein Luftspalt (5.3) ausgebildet ist und im bestromten Zustand der Erregerspule (3) der Hauptanker (5.1) und die Ankerscheibe (5.2) aneinander anliegen,
wobei
- die Ankerbaugruppe (5) ein elastisches Element (5.4) aufweist, mit dessen Vorspannkraft im bestromten Zustand der Erregerspule (3) ein elastischer Kraftschluss zwischen dem Hauptanker (5.1) und der Ankerscheibe (5.2) derart herstellbar ist, dass die Ankerscheibe (5.2) unter Erzeugung des Luftspalts (5.3) gegen den Polkern (4) bewegbar ist, wenn eine von der bestromten Erregerspule (3) in der Ankerbaugruppe (5) bewirkten Magnetkraft die Vorspannkraft unterschreitet,
wobei die Ankerscheibe (5.2) einen Führungsbolzen (5.20) aufweist,
- der Hauptanker (5.1) eine Sacklochbohrung (5.10) zur verschieblichen Aufnahme des Führungsbolzens (5.20) aufweist, und
- das elastische Element (5.4) in der Sacklochbohrung (5.10) angeordnet ist, welches sich einerseits gegen einen Bohrungsgrund (5.11) der Sacklochbohrung (5.10) abstützt,
**dadurch gekennzeichnet, dass** sich das elastische Element (5.4) andererseits gegen den Führungsbolzen (5.20) abstützt.

2. Elektromagnet (1) nach Anspruch 1,
**dadurch gekennzeichnet, dass**
das elastische Element (5.4) derart ausgebildet ist, dass bei einer unbestromten Erregerspule (3) mittels des elastischen Elementes (5.4) eine definierte Vorspannkraft erzeugbar ist.

3. Elektromagnet (1) nach Anspruche 1 oder 2,
**dadurch gekennzeichnet, dass**
- der Polkern (4) eine Führungsbuchse (4.1) zur verschieblichen Aufnahme eines Ankerstößels (5.5) aufweist, und
- der Ankerstößel (5.5) kraftschlüssig mit der Ankerscheibe (5.2) verbunden ist.

4. Elektromagnet (1) nach einem der vorhergehenden Ansprüche,
**dadurch gekennzeichnet, dass**
der Hauptanker (5.1) verschiebbar in einem topfförmigen Flussleitrohr (6) mit einem Boden (6.1) angeordnet ist.

5. Elektromagnet (1) nach einem der vorhergehenden Ansprüche,
**dadurch gekennzeichnet, dass**
das elastische Element (5.4) eine Druckfeder (5.40) ist.

## Claims

1. An electromagnet (1) for producing a linear movement, comprising:
- a hollow cylindrical housing (2) with a pot-shaped geometry,
- an excitation coil (3) arranged in the housing,
- a pole core (4) fixed with respect to the housing (2), and
- an armature assembly (5) mounted centrally in the excitation coil (3), having a main armature (5.1) which can be displaced with respect to the housing and an armature disk (5.2) which can be displaced with respect to the housing (2), wherein
- an air gap (5.3) is formed between the main armature (5.1) and the armature disk (5.2) in the non-energized state of the excitation coil (3), and the main armature (5.1) and the armature disk (5.2) rest against one another in the energized state of the excitation coil (3), wherein
- the armature assembly (5) has an elastic element (5.4), by means of the preloading force of which, in the energized state of the excitation coil (3), an elastic frictional connection can be produced between the main armature (5.1) and the armature disk (5.2) in such a way that the armature disk (5.2) can be moved against the pole core (4) while producing the air gap (5.3) if a magnetic force produced by the energized excitation coil (3) in the armature assembly (5) falls below the preloading force,
wherein the armature disk (5.2) has a guide bolt (5.20),
- the main armature (5.1) has a blind hole (5.10) for displaceably receiving the guide bolt (5.20), and
- the elastic element (5.4) is arranged in the blind hole (5.10), which element is supported on the one hand against a hole bottom (5.11) of the blind hole (5.10), **characterized in that** the elastic element (5.4) is supported on the other hand against the guide bolt (5.20).

2. The electromagnet (1) according to claim 1,
**characterized in that**
the elastic element (5.4) is designed in such a way that a defined preloading force can be generated by means of the elastic element (5.4) when the excitation coil (3) is not energized.

3. The electromagnet (1) according to claim 1 or 2,
**characterized in that**
- the pole core (4) has a guide bushing (4.1) for displaceably receiving an armature tappet (5.5), and
- the armature tappet (5.5) is connected to the armature disk (5.2) in a force-fitting manner.

4. The electromagnet (1) according to any one of the preceding claims,
**characterized in that**
the main armature (5.1) is displaceably arranged in a pot-shaped flow guide tube (6) with a base (6.1).

5. The electromagnet (1) according to any one of the preceding claims,
**characterized in that**
the elastic element (5.4) is a compression spring (5.40).

## Revendications

1. Électroaimant (1) de production d'un mouvement linéaire, comprenant :
- une enveloppe (2) cylindrique creuse ayant une géométrie en forme de pot,
- une bobine (3) d'excitation montée dans l'enveloppe,
- un noyau (4) polaire fixe par rapport à l'enveloppe (2), et
- un module (5) d'induit monté centré dans la bobine (3) d'excitation et ayant un induit (5.1) principal coulissant par rapport à l'enveloppe et un disque (5.2) d'induit coulissant par rapport à l'enveloppe (2), dans lequel
- à l'état non alimenté en courant de la bobine (3) d'excitation, il est constitué entre l'induit (5.1) principal et le disque (5.2) d'induit un entrefer (5.3) et, dans l'état alimenté en courant de la bobine (3) d'excitation, l'induit (5.1) principal et le disque (5.2) d'induit s'appliquent l'un à l'autre,
dans lequel
- le module (5) d'induit a un élément (5.4) élastique, par la force de précontrainte duquel il peut être produit, dans l'état alimenté en courant de la bobine (3) d'excitation, une coopération de force élastique entre l'induit (5.1) principal et le disque (5.2) d'induit, de manière à ce que le disque (5.2) d'induit puisse, avec production de l'entrefer, (5.3) être déplacé vers le noyau (4) polaire, si une force magnétique, provoquée dans le module (5) d'induit par la bobine (3) d'excitation alimentée en courant ,est inférieure à la force de précontrainte,
dans lequel le disque (5.2) d'induit a un axe (5.20) de guidage,
- l'induit (5.1) principal a un trou (5.10) borgne de réception à coulissement de l'axe (5.20) de guidage, et
- l'élément (5.4) élastique est disposé dans le trou (5.10) borgne et s'appuie d'un côté sur un fond (5.11) du trou (5.10) borgne,
**caractérisé en ce que** l'élément (5.4) élastique s'appuie d'autre part sur l'axe (5.20) de guidage.

2. Électroaimant (1) suivant la revendication 1,
**caractérisé en ce que**
l'élément (5.4) élastique est constitué de manière à pouvoir, lorsque la bobine (3) d'excitation n'est pas alimenté en courant, produire une force de précontrainte définie au moyen de l'élément (5.4) élastique.

3. Électroaimant (1) suivant la revendication 1 ou 2, **caractérisé en ce que**
- le noyau (4) polaire a un manchon (4.1) de guidage pour la réception à coulissement d'un poussoir (5.5) d'induit, et
- le poussoir (5.5) d'induit est assemblé à coopération de force avec le disque (5.2) d'induit.

4. Électroaimant (1) suivant l'une des revendications précédentes,
**caractérisé en ce que**
l'induit (5.1) principal est monté coulissant dans un tube (6) de conduite de flux en forme de pot ayant un fond (6.1).

5. Électroaimant (1) suivant l'une des revendications précédentes,
**caractérisé en ce que**
l'élément (5.4) élastique est un ressort (5.40) de compression.
